(19) **Europäisches Patentamt European Patent Office Office européen des brevets**

(11) **EP 3 875 947 B1**

(12) **EUROPEAN PATENT SPECIFICATION**

(45) Date of publication and mention
of the grant of the patent:
**25.09.2024 Bulletin 2024/39**

(21) Application number: **20880330.4**

(22) Date of filing: **27.10.2020**

(51) International Patent Classification (IPC):
**G01N 22/00** $^{(2006.01)}$

(52) Cooperative Patent Classification (CPC):
**G01N 22/00**

(86) International application number:
**PCT/CN2020/123970**

(87) International publication number:
**WO 2021/135569 (08.07.2021 Gazette 2021/27)**

(54) **SYSTEM AND METHOD FOR MEASURING CARBON CONTENT OF FLY ASH USING HOLLOW METALLIC WAVEGUIDE UNDER DYNAMIC CONDITIONS**

SYSTEM UND VERFAHREN ZUR MESSUNG DES KOHLENSTOFFGEHALTS VON FLUGASCHE UNTER VERWENDUNG EINES HOHLEN METALLISCHEN WELLENLEITERS UNTER DYNAMISCHEN BEDINGUNGEN

SYSTÈME ET PROCÉDÉ DE MESURE DE LA TENEUR EN CARBONE DE CENDRES VOLANTES À L'AIDE D'UN GUIDE D'ONDES MÉTALLIQUE CREUX EN CONDITIONS DYNAMIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.12.2019 CN 201911408462**

(43) Date of publication of application:
**08.09.2021 Bulletin 2021/36**

(73) Proprietors:
- **North China Electric Power University**
  **Beijing 102206 (CN)**
- **State Grid Liaoning Electric Power Company Ltd.**
  **Shenyang, Liaoning 110006 (CN)**
- **Shanghai Xianghe Engineering Technology Co., Ltd.**
  **Minhang District**
  **Shanghai**
  **201107 (CN)**

(72) Inventors:
- **NIU, Yuguang**
  **Beijing 102206 (CN)**
- **REN, Dantong**
  **Beijing 102206 (CN)**
- **HU, Bo**
  **Beijing 102206 (CN)**
- **GAI, Xinhua**
  **Beijing 102206 (CN)**
- **ZHOU, Chengxi**
  **Beijing 102206 (CN)**
- **CUI, Xiao**
  **Beijing 102206 (CN)**

(74) Representative: **Gille Hrabal**
**Partnerschaftsgesellschaft mbB**
**Patentanwälte**
**Brucknerstraße 20**
**40593 Düsseldorf (DE)**

(56) References cited:
**CN-A- 107 356 612      CN-A- 107 356 612
CN-A- 111 060 532      CN-Y- 2 720 426
JP-A- H 112 612           JP-A- H1 038 817
US-A- 5 109 201           US-A- 5 177 444
US-A- 5 177 444**

- **REN DANTONG ET AL: "Concentration-independent unburnt carbon content metering in fly ash using a waveguide", MEASUREMENT, INSTITUTE OF MEASUREMENT AND CONTROL. LONDON, GB, vol. 146, 27 June 2019 (2019-06-27), pages 356 - 362, XP085761149, ISSN: 0263-2241, [retrieved on 20190627], DOI: 10.1016/J.MEASUREMENT.2019.06.043**

- **REN DANTONG; NIU YUGUANG; LUO HUANHUAN; PENG FAN; GAI XINHUA: "Concentration-independent unburnt carbon content metering in fly ash using a waveguide", MEASUREMENT., INSTITUTE OF MEASUREMENT AND CONTROL. LONDON, GB, vol. 146, 27 June 2019 (2019-06-27), GB, pages 356 - 362, XP085761149, ISSN: 0263-2241, DOI: 10.1016/j.measurement.2019.06.043**
- **PENG FAN, YUGUANG NIU, KAI GAO, XINHUA GAI, LI DAI, LINA GENG: "Comparison of different microwave methods for unburned carbon content in fly ash determination", MEASUREMENT, vol. 139, 25 February 2019 (2019-02-25), pages 346 - 354, XP055826103, DOI: 10.1016/j.measurement.2019.02.061**
- **WANG JIANFENG, LI SHUO, LU YE, WANG ZHIJUN, WANG MENG'AN: "Development and Application of Online Monitoring Device of Flying Ash Carbon Content", HUADIAN TECHNOLOGY, vol. 34, no. 10, 1 October 2012 (2012-10-01), pages 14 - 77, XP055828284, ISSN: 1674-1951**

## Description

## Field

The present invention relates to the field of measuring electromagnetic parameters and the carbon content of fly ash in a tail flue of a thermal power plant, and in particular to a system and method for detecting the carbon content of fly ash by a hollow metallic waveguide under dynamic conditions.

## Background

Carbon content of fly ash is an important parameter indicating the combustion efficiency of boilers in the thermal power plant. Accurate, timely and effective monitoring of the carbon content of the fly ash is of great significance for adjusting the combustion of the boilers and improving combustion efficiency. At present, a variety of widely used methods for measuring the carbon content of the fly ash have been developed, which are mainly divided into two categories: a physical measurement method and a soft measurement method. Physical measurement is to use the physicochemical properties, such as combustibility and a high dielectric constant of carbon, to detect the carbon content of the fly ash, mainly including loss-on-ignition method, fluidised bed $CO_2$ method, photoacoustic effect method, radiation method and microwave method, etc. The loss-on-ignition method is to obtain the carbon content of the fly ash through the weight difference before and after the combustion of a fly ash sample, which is not only a traditional analysis method for the carbon content of the fly ash, but also the technical basis for calibration of the fly ash sample. The fluidised bed $CO_2$ measurement method calculates the carbon content of the fly ash by monitoring the content of $CO_2$ generated after combustion of the fly ash sample. These above two methods have serious shortcomings such as long retardation time of measurement and poor representativeness of result analysis, etc., therefore cannot effectively guide production in time. The photoacoustic effect method uses acoustic signals generated by the fly ash when it absorbs pulsed monochromatic light to detect the carbon content of pulverised coal and other components of the fly ash. The radiation method regards fly ash as a mixture composed of two substances, one has high atomic number (Si, Al, Fe, etc.,) and the other one has low atomic number (C, H, O). By using the photoelectric effect and the Compton scattering effect, when the carbon content of the fly ash is low, the photoelectric effect is strong and the Compton scattering effect is weak. On the contrary, the photoelectric effect is weak and the Compton scattering effect is strong. The carbon content of the fly ash can be measured by recording the changes in the intensity of rays by a nuclear detector. The accuracy of the above measurement method is high under ideal conditions, however, considering of coals with variable quality and complex compositions, the measurement accuracy is significantly affected by fly ash particles. In the radiation method, $\gamma$-rays are extremely harmful to a human body, which leads to high demand on protection devices, and result in higher costs. In addition, problems such as analysis retardation and unsatisfactory sample representativeness still exist, which means that the radiation method still cannot meet the needs of the site.

The microwave method is currently the most researched and applied, and the fastest measurement method for carbon measurement. This method detects the carbon content of the fly ash from the boilers based on the absorption of carbon elements in the fly ash on microwave energy or its influence on the microwave phase, and can meet online measurement requirements. Measurement accuracy and speed are expected to be further improved with further and deeper research. Based on the principle, microwave carbon measurement mainly comprises microwave absorption and microwave resonance methods. According to fly ash sample collection methods, there are mainly a sampling type microwave carbon measurement method and an ash path-free microwave direct carbon measurement method. It is known that many power plants are still using the sampling method to detect fly ash samples. The sampling method generally has the following problems: when a fly ash sample enters a measurement cavity, the sudden drop of temperature results in condensation, which blocks the measurement cavity, in addition lack of complete understanding of the features and distribution of a flue gas flow field of the tail flue cause the sampling became short of representativeness, and also ignoring the influence of fly ash concentration on the measurement results, and last the increasing investment and maintenance costs of the additional equipment. Subsequently, a built-in fly ash carbon content measuring system in a flue was proposed, which has a simple structure, no sampling requirement, and capability of meeting the requirements of real-time measurement. Although this method solves the problems of sampling representativeness and ash blockage, it still has problems of microwave signal multipath reflection interference and uncertain flue fly ash density, so reliability of the measurement results is questioned. US5177444A and CN107356612A disclose examples of microwave methods for carbon measurement.

The requirements of the thermal power plants on real-time and accurate detection of the carbon content of the fly ash cannot be met easily due to the existence of these above problems. The present invention provides a method for detecting the electromagnetic parameters and the carbon content of the fly ash in a tail flue by using a hollow metallic waveguide under dynamic conditions to solve these problems.

## Summary

The present invention discloses a system and method for detecting the carbon content of fly ash by a hollow metallic waveguide under dynamic conditions, so as to solve any of the above problems and other potential problems in the prior art.

In order to achieve the above objective, the technical solution of the present invention is as follows: a system for detecting the carbon content of fly ash by a hollow metallic waveguide under dynamic conditions, which comprises:

a bypass measurement unit, used for collecting fly ash inside a flue in real time; and

a measurement device, used for emitting microwaves to measure fly ash inside the bypass measurement unit, and for analyzing measured data;

wherein the bypass measurement unit is connected to the flue and the measurement device is connected to the bypass measurement unit through a coaxial cable.

Further, the bypass measurement unit comprises:

a hollow metallic waveguide used for measuring the carbon content of the fly ash by using transmitted microwave signals, wherein two microwave transmission ports are symmetrically formed in the outer side wall of the hollow metallic waveguide, and are respectively connected to coaxial converters through sleeves, and the sleeves are provided with cooling devices for cooling and preventing the high temperature of measured flue gas from affecting the coaxial converters;

two ends of the hollow metal waveguide are internally provided with electromagnetic wave isolation devices for reflecting electromagnetic waves, so as to make the electromagnetic waves be incapable of being reversely transmitted to the two ends of the hollow metallic waveguide connected to the electromagnetic waves for avoiding energy dissipation;

the hollow metallic waveguide is connected to a flue gas processing device for performing gas-solid separation on flue gas and then introducing the separated flue gas into the hollow metallic waveguide through the connecting flanges at the two ends;

a standard fly ash sample inlet is arranged on one of the connecting flanges and communicates with the inside of the hollow metallic waveguide; and

the measurement device is connected to the two coaxial converters through coaxial cables.

Further, the device comprises a purge unit for purging the inside of the hollow metallic waveguide, and the purge unit comprises a purge connection pipe, a forward purge valve and a reverse purge valve; one end of the forward and reverse purge valve are respectively connected to the two ends of the hollow metallic waveguide through pipes, and the other one end of the forward and the reverse purge valve are connected to a purge gas source through the purge connection pipe.

Further, the device also comprises heat-insulation sealing components for preventing heat transfer and achieving a sealing function, and metal coupling pieces for adjusting the frequency of input and output electromagnetic waves; both the heat-insulation sealing components and the metal coupling pieces are arranged between the cooling devices and the microwave transmission ports; and

the heat-insulation sealing component is a mica sheet with a thickness of 0.5 mm-1 mm; the metal coupling piece is a rectangular body of which the central position is provided with a rounded rectangular through hole; and there can be one group of or multiple groups of metal coupling pieces.

Further, the flue gas processing device comprises jet devices, a cyclone separator and an air compressor, wherein

The jet devices comprise a first jet device and a second jet device, the first jet device and the second jet device are arranged at the two ends of the hollow metallic waveguide through the flanges, and the cyclone separator is arranged between the first jet device and the flange.

The electromagnetic wave isolation device is a rectangular metal sheet with a thickness of 0.8-1.2 mm; and one end of the electromagnetic wave isolation device is located at the end portion of the hollow metallic waveguide, the other end of the electromagnetic wave isolation device is located above the microwave transmission port and does not exceed a circle center position of the microwave transmission port.

Further, the length of the hollow metallic waveguide is an even multiple of a measured microwave wavelength, and cannot be larger than 300 mm, and also the cross section of the hollow metallic waveguide should be circular or rectangular.

Another purpose of the present invention is to provide a method for measuring fly ash by utilizing the above device, which specifically comprises the following steps:

S1) first, inject a standard fly ash sample of the same coal into a hollow metallic waveguide through a standard fly ash sample inlet, measure the standard fly ash sample by microwaves in the hollow metallic waveguide, the measurement device will get the data and analyze it to obtain data of the amplitude of S21 and the phase of S21 of the standard fly ash sample, and then fit the obtained data of the amplitude and phase of S21 to obtain a fitting relational expression of the standard fly ash sample at different frequency points; and

S2) initiate the air compressor to introduce fly ash in a flue into the hollow metallic waveguide through the first jet device and a cyclone separator, measure the introduced un-measured fly ash (to be measured) through the microwave at any frequency point selected by the measurement device, obtain the amplitude and phase of a fly ash sample (to be measured), substitute the amplitude and the phase into the relational expression obtained in the S1) to calculate the carbon content of the fly ash sample to be measured.

Further, the S1) comprises the following specific steps:

S1.1) first, inject the standard fly ash sample of the same coal into the hollow metallic waveguide through the standard fly ash sample inlet; and
S1.2) initiate the measurement device to measure the standard fly ash in the hollow metallic waveguide so as to obtain data of the amplitude and phase of S21 of the standard fly ash, fit the obtained data of the amplitude and phase of S21 respectively by using linear, quadratic or exponential functions, and then select a fitting result with the best fitting degree or a fitting result with a fitting degree larger than 0.95 as the calibration curve to obtain the fitting relational expression at different frequency points.

Further, the S2) comprises the following specific steps:

S2.1) acquire fly ash, send the fly ash sample to be measured (with the unknown carbon content while with the same coal type of the same power plant at the same frequency point) acquired from a tail flue of the same power plant into the cyclone separator 17 for gas-solid separation, wherein gas is discharged, and fly ash solid particles fall into the hollow metallic waveguide due to self-gravity and the negative pressure formed by the first jet device 15; and
S2.2) initiate the measurement device to measure the fly ash to be measured in the hollow metallic waveguide so as to obtain data of the amplitude and phase of S21 of the fly ash to be measured, substitute the measured data of the amplitude and phase of S21 into the fitting relational expression of the calibration curve obtained in the S1.2) to obtain the value of the carbon content of the fly ash to be measured.

Further, the method further comprises S4), a purging and cleaning step: terminate the measurement loop, starting a purging program, performing forward purging from top to bottom, in addition the compressed air will perform the forward purging on the first jet device, the cyclone separator, the hollow metal waveguide and a second jet device respectively. Then perform a reverse purging from bottom to top with a path in opposite to that of the forward purging.

The present invention has the beneficial effect that because of the utilization of the above technical solution, the system of the present invention enable the fly ash sample acquired from the tail flue of the power plant to pass through the waveguide in floating flow state, and the microwave signals directly pass through the fly ash sample to be measured to obtain the measured result. The waveguide is essentially a "measurement channel" instead of a "fly ash conveying channel".

The measurement result of the microwave carbon measurement method should have measurement traceability, which is, it must have a series of reference standards that can be linked to the measurement result, and can be realized through calibration, comparison and verification. However, regardless of the sampling type carbon measurement method or the ash path-free type carbon measurement method, there is always a problem that the traceability of the measured value cannot be realized, that is, the measurement device cannot be online calibrated on site. The carbon content of the fly ash can be detected by the hollow metallic waveguide under the dynamic conditions, the standard fly ash sample fed into the waveguide from the standard fly ash sample inlet, enables the calibration of the measurement result under the same measurement environment.

3) A dynamic measurement comprises a purge step. Purge is an operation mainly done for the ash loop. Fly ash samples to be measured are continuously taken out from a fly ash acquiring port and flow through the waveguide. After a period of time, the inner wall of the waveguide will have a phenomenon of residual fly ash sample adhesion, and excessive fly ash sample adhesion can affect a measured zero-point position, so that the measurement accuracy is reduced. In addition, the purge step can also avoid blockage caused by adhesion of walls of inner cavities of measurement units. In order to strengthen a purging effect, forward and reverse pulling purge modes are adopted. For example, after measurement performed for 30 minutes, compressed air is blown into the entire measurement channel, and forward ventilation (from top to bottom) and reverse ventilation (from bottom to top) are respectively performed for 30 seconds (the specific time depends on sampling conditions on site). After the forward and reverse purge processes finish, an air valve is switched on to introduce atmosphere into the measurement device, and then the "zero point calibration" program of a measurement instrument is initiated.

4) Compared with other measurement methods, the present invention has higher resolution and measurement accuracy. Under the same measurement conditions, compared with the current free space measurement method, it is found that measurement data of the free space measurement method is excursive , and difficult to distinguish, and it is difficult to carry out theoretical analysis of carbon content and microwave attenuation; however, the measurement results between different carbon contents of the present invention are relatively stable and can be distinguished obviously. Every 2% increase in the carbon content corresponds to a 15-20° change in the parameter S21, and therefore the accuracy is better.

## Brief Description of the Drawings

Fig. 1 is a structural schematic diagram of a system for detecting the carbon content of fly ash by a hollow metallic waveguide under dynamic conditions of the present invention.
Fig. 2 is a structural schematic diagram of a bypass measurement unit of the present invention.

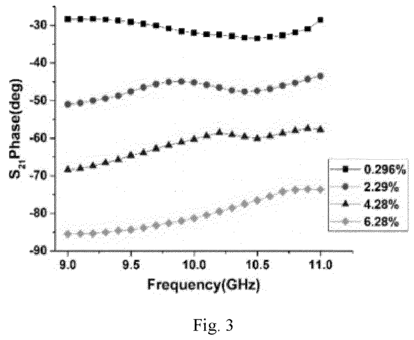

Fig. 3 is a schematic diagram of a measurement result curve of an embodiment using a method of the present invention.

In the figures:
1. hollow metallic waveguide, 2. cooling device, 3. coaxial converter, 4. electromagnetic wave isolation device, 5. connecting bolt, 6. fixing groove, 8. heat-insulation sealing component, 9. metal coupling piece, 10. microwave transmission port, 11. connecting seat, 12. heat insulation layer, 13. sleeve, 14. measurement device, 15. first jet device, 16. second jet device, 17. cyclone separator, 18. air compressor, 19. sample gas introduction port, 20. forward purge valve, 21. reverse purge valve, 22. connecting flange, 23. purge pipe, 24. connecting pipe, 25. flue gas connecting pipe, 26. flue, 27. fly ash discharging pipe.

## Detailed Description of the Embodiments

In order to make the above objects, features and advantages of the present invention more obvious and easier to be understood, the present invention will be further described with reference to the accompanying drawings.

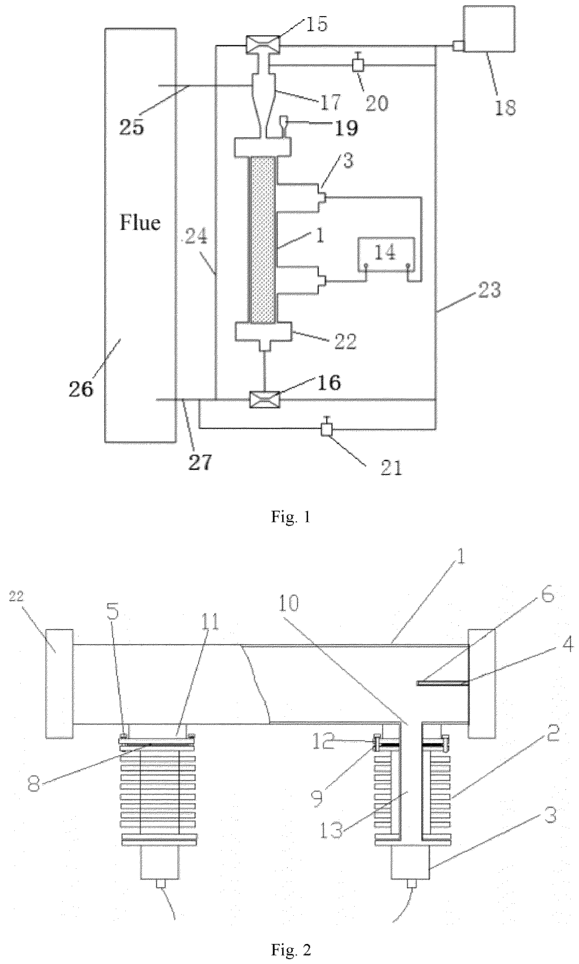

As shown in Fig. 1, the present invention discloses a system for detecting the carbon content of fly ash by a hollow metallic waveguide under dynamic conditions, which includes:

bypass measurement unit, used for collecting fly ash arriving from a flue in real time; and
measurement device 14, used for emitting microwaves to measure fly ash inside the bypass measurement unit, and for analyzing measured data;
wherein the bypass measurement unit is connected to flue 26, and the measurement device 14 is connected to the bypass measurement unit through a coaxial cable.

Further, the bypass measurement unit includes:

a hollow metallic waveguide 1 used for measuring the carbon content of the fly ash by using transmitted microwave signals, wherein two microwave transmission ports 10 are symmetrically formed in the outer side wall of the hollow metallic waveguide 1, and are respectively connected to coaxial converters 3 through sleeves 13, and the sleeves 13 are provided with cooling devices 2 used for cooling and preventing the high temperature of measured flue gas from affecting the coaxial converters;
both two ends of the hollow metallic waveguide 1 are internally provided with electromagnetic wave isolation devices 4 for reflecting microwaves, so as to make the microwaves incapable of being reversely transmitted to the two ends of the hollow metallic waveguide 1 for avoiding energy dissipation;
the hollow metallic waveguide 1 is connected to a flue gas processing device for performing gas-solid separation on flue gas and then introduce separated flue gas into the hollow metallic waveguide 1 through the connecting flanges 22 at the two ends;
the standard fly ash sample inlet 19 is arranged on one of the connecting flanges 22 and communicates with the inside of the hollow metal waveguide 1; and
the measurement device 14 is connected to the two coaxial converters through coaxial cables.

The device further includes a purge unit for purging the inside of the hollow metallic waveguide, and the purge unit includes purge pipe 23, forward purge valve 20 and reverse purge valve 21. One end of the forward purge valve 20 and one end of the reverse purge valve 21 are respectively connected to the two ends of the hollow metallic waveguide 1 through pipes, and the other end of the forward purge valve 20 and the other end of the reverse purge valve 21 are connected to a purge gas source through the purge connection pipe 23.

Further, the device also includes heat-insulation sealing components 8 for preventing heat transfer and achieving a sealing function, and metal coupling pieces 9 for adjusting the frequency of input and output electromagnetic waves. The heat-insulation sealing components 8 and the metal coupling pieces 9 are arranged between the cooling devices 2 and the microwave transmission ports 10; and

the heat-insulation sealing component 8 is a mica sheet with a thickness of 0.5 mm-1 mm; the metal coupling piece 9 is a rectangular body of which the central position is provided with a rounded rectangular through hole; and there can be one group of or multiple groups of metal coupling pieces 9.

The flue gas processing device includes jet devices, cyclone separator 17 and air compressor 18, wherein

the jet devices include first jet device 15 and second jet device 16, the first jet device 15 and the second jet device 16 are arranged at the two ends of the hollow metallic waveguide 1 through the connecting flanges 22, and the cyclone separator 17 is arranged between the first jet device 15 and the connecting flange 22.

The electromagnetic wave isolation device 4 is a rectangular metal sheet with a thickness of 0.8-1.2 mm; and one end of the electromagnetic wave isolation device 4 is located at the end portion of the hollow metallic waveguide 1, the other end of the electromagnetic wave isolation device 4 is located above the microwave transmission port 10 and does not exceed a circle center position of the microwave transmission port 10.

The length of the hollow metallic waveguide 1 is an even multiple of a measured microwave wavelength, and cannot be larger than 300 mm, and the cross section of the hollow metal waveguide 1 is circular or rectangular.

Another purpose of the present invention is to provide a method for measuring fly ash by utilizing the above device, which specifically includes the following steps:

> S1) first, inject a standard fly ash sample of same coal into a hollow metallic waveguide 1 through the standard fly ash sample inlet 19, measure the standard fly ash sample by microwaves in the hollow metallic waveguide 1, analyze data obtained by a measurement device 14 to obtain data of the amplitude and phase of S21 of the standard fly ash sample, and fit the obtained data of the amplitude and phase of S21 to obtain a fitting relational expression of the standard fly ash sample at different frequency points; and
> S2) initiate air compressor 18 to introduce fly ash in a flue into the hollow metallic waveguide 1 through the first jet device 15 and the cyclone separator 17, measure the introduced fly ash to be measured by the microwave at any frequency point selected by the measurement device 14 to obtain the amplitude and phase of a fly ash sample to be measured, substitute the amplitude and the phase into the relational expression obtained in the S1) to calculate the carbon content of the fly ash sample to be measured.

Further, the S1) includes the following specific steps:

> S1.1) first, inject the standard fly ash sample of the same coal into the hollow metallic waveguide 1 through the standard fly ash sample inlet 19; and
> S1.2) initiate the measurement device 4 to measure the standard fly ash in the hollow metallic waveguide 1 so as to obtain the data of the amplitude and phase of S21 of the standard fly ash, fit the obtained data of the amplitude and phase of S21 respectively by using linear, quadratic or exponential functions, and select a fitting result with the best fitting degree or a fitting result with the fitting degree larger than 0.95 as the calibration curve to obtain the fitting relational expression at different frequency points.

Further, the S2) includes the following specific steps:

> S2.1) acquire fly ash, send the fly ash sample to be measured (with the unknown carbon content of the same coal type of the same power plant at the same frequency point) acquired from a tail flue of the same power plant into the cyclone separator 17 for gas-solid separation, wherein gas is discharged, and fly ash solid particles fall into the hollow metallic waveguide 1 due to self-gravity and the negative pressure formed by the first jet device 15, and
S2.2) initiate the measurement device 14 to measure the fly ash to be measured in the hollow metallic waveguide 1 so as to obtain the data of the amplitude and phase of S21 of the fly ash to be measured, substitute the measured data of the amplitude and phase of S21 into the fitting relational expression of the calibration curve obtained in the S1.2) to obtain a determined value of the carbon content of the fly ash to be measured.

Further, the method further includes S4), a purging and cleaning step: terminate the measurement loop, start a purging program, performing forward purging from top to bottom, performing the forward purging on the first jet device, the cyclone separator, the hollow metallic waveguide 1, and the second jet device by compressed air, and then perform reverse purging from bottom to top with a path in opposite to that of the forward purging.

The microwave frequency is 9-18 GHz.

S21=b2/a1, S21 refers to a forward transmission gain when an output port is terminated.

Embodiment:

The device includes: flue gas connecting pipe 25, hollow metallic waveguide 1, coaxial converters 3, electromagnetic wave isolation devices 4, first jet device 15, second jet device 16, cyclone separator 17, cooling devices 2, measurement device 14 and air compressor 18, wherein

> two ends of the hollow metallic waveguide 1 are provided with connecting flanges 22, the cyclone separator 17 is arranged at one end of the hollow metallic waveguide 1, and connected with one connecting flange 22, and the connecting flange 22 is provided with a sample gas introduction port 19,
> the first jet device 15 and the second jet device 16 are arranged at the two ends of the hollow metallic waveguide 1, the first jet device 15 is connected to the cyclone separator 17, the second jet device 16 is connected to the connecting flange at the other end, and the first jet device 15 and the second jet device 16 are connected by connecting pipe 24,
> one end of the flue gas connecting pipe 25 is connected to flue 26, and the other end of the flue gas connecting pipe 25 is respectively connected to the first jet device 15 and the cyclone separator 17, one end of a fly ash discharging pipe 27 is connected to the flue 26, and the other end of the fly ash discharging pipe 27 is connected to the second jet device 16,

the measurement device 14 is connected to the hollow metallic waveguide 1 through the coaxial converters 3,

the cooling devices 2 are arranged between the coaxial converters 3 and the hollow metallic waveguide 1,

the electromagnetic wave isolation devices 4 are arranged at the two ends inside the hollow metallic waveguide 1, and

the air compressor 18 is connected to the first jet device 15 and the second jet device 16 respectively through pipes.

The device further includes a purge unit for purging the hollow metal waveguide, and the purge unit includes a purge pipe 23, a forward purge valve 20 and a reverse purge valve 21, and one end of the purge pipe 23 is connected to the air compressor 18, and the other end of the purge pipe 23 is connected to the two ends of the hollow metal waveguide 1 through the forward purge valve 20 and the reverse purge valve 21 respectively.

As shown in Fig. 2, two microwave transmission ports 10 are symmetrically formed in the side wall of the hollow metal waveguide 1, and are both provided with connecting seats 11, and the two cooling devices sleeve sleeves 13, one ends of the cooling devices 2 are respectively connected to the two connecting seats by connecting bolts, the other ends of the two cooling devices are respectively connected to the two coaxial converters 3, and the two coaxial converters 3 are connected to the measurement device 14 through coaxial cables.

According to the embodiment of the present disclosure, the device further includes heat-insulation sealing pieces 8 for preventing heat transfer and achieving a sealing function, and metal coupling pieces 9 for adjusting the frequency of microwave signals for detection of fly ash,

Central positions of the heat-insulation sealing pieces 8 and the metal coupling pieces 9 are provided with microwave transmission ports having the same sectional area as the microwave transmission ports 10, and the heat-insulation sealing pieces 8 and the metal coupling pieces 9 are stacked between the connecting seats 11 and the cooling devices 2.

The electromagnetic wave isolation device 4 is a rectangular metal sheet with a thickness of 0.5-3 mm; and the heat-insulation sealing piece 8 is a mica sheet with a thickness of 0.5 mm-1 mm, and the area of the mica sheet is smaller than the sectional area of the connecting seat 11.

The length of the hollow metal waveguide 1 is an even multiple of a measured microwave wavelength, and cannot be larger than 300 mm, and the cross section of the hollow metal waveguide 1 is circular or rectangular.

According to the embodiment of the present disclosure, the measurement device 14 is a vector network analyzer, and the measurement device includes a network analyzer E5071C or a handheld microwave analyzer N9918A.

There is one group of or multiple groups of metal coupling pieces 9.

Heat insulation layers 12 are arranged on surfaces of the connecting bolts 5, and the heat insulation layers 12 are made of mica.

One end of the electromagnetic wave isolation device 4 is located at the end portion of the hollow metallic metal waveguide 1, the other end of the electromagnetic wave isolation device 4 is located above the microwave transmission port 10 and does not exceed a circle center position of the microwave transmission port 10.

According to the embodiment of the present invention, the S1) includes the following specific steps: initiate the vector network analyzer to measure standard fly ash in the hollow metallic waveguide so as to obtain amplitude and phase data of the standard fly ash, fit the obtained amplitude and phase data respectively by using linear, quadratic or exponential functions, and then select a fitting result with the best fitting degree or a fitting result with the r fitting degree larger than 0.98 as the calibration curve to obtain a fitting relational expression at different frequency points. Using a measurement result of a standard fly ash sample of a certain power plant as an example, a linear fitting result is as shown in the following formula:

$$Pha = -29.55UCC + 6.221.$$

In the formula, Pha represents a phase at a certain frequency point, and UCC represents the carbon content of the fly ash.

According to the embodiment of the present disclosure, the S2) includes the following specific steps:

S2.1) acquire fly ash, send a fly ash sample acquired from a tail flue of the same power plant into the cyclone separator for gas-solid separation, wherein gas is discharged, and fly ash solid particles fall into the flue gas processing device due to self-gravity and the negative pressure formed by the jet device, and

S2.2) initiate the vector network analyzer to measure the fly ash in the hollow metallic waveguide so as to obtain measured amplitude and phase data of the fly ash, substitute the measured amplitude and phase data of the unknown carbon content of the same coal type of the same power plant at the same frequency point into the calibration curve to obtain a determined value of the carbon content of the fly ash.

S3) discharge the fly ash, wherein the measured fly ash sample flowing through the hollow metallic waveguide is extracted by the jet devices after measurement, and passes through the fly ash discharging pipe to return to the tail flue.

According to the embodiment of the present disclosure, the method further includes a purging step, specifically, purging and cleaning are performed, a measurement loop is closed, and a purging program is started. Forward purging is performed from top to bottom, the forward purging is performed on the jet device 1, the cyclone separator, the hollow metallic waveguide and the jet device 2 respectively by compressed air, reverse purging is performed from bottom to top, and a path of the reverse purging in opposite to that of the forward purging.

Embodiment

Fig. 1 is a diagram of a measurement system for the method of the present invention. Part number 1 represents a hollow metallic waveguide which is also a measurement channel of the entire measurement system. Part number 2 represents a measurement device, and a vector network 2 is connected to the hollow metallic waveguide 1 through a coaxial cable 3. Jet devices 4 and 5 provide negative pressure for the entire system, a cyclone separator 6 is used for performing gas-solid separation on flue gas acquired by a sampling pipe. The cyclone separator is connected to the hollow metal waveguide through a flange, and fly ash solids pass through the waveguide to be measured. A throat portion of the jet device 4 is connected to the upper end of the cyclone separator 6, a throat portion of the jet device 5 is connected to the lower end of the hollow metallic waveguide through a flange, and a fly ash sample passing through the waveguide is sucked away by the negative pressure provided by the jet device 5 and enters a tail flue again through a fly ash discharging pipe 11. Part number 7 represents a standard fly ash sample inlet, and the measurement result of a standard fly ash sample can be used to calibrate the measurement result of an unknown measured fly ash sample. Part numbers 8 and 9 respectively represent a forward purge valve and a reverse purge valve, which are switched off during measurement, and switched on during purge. The sampling pipe 10 and the fly ash discharging pipe 11 are installed on sleeves welded on the tail flue of the power plant through flanges. The entire system is in a sealed state after connection and will not pollute the environment. A graph of a fitting relationship between the carbon content and the phase of S21 is drawn at frequency points 13 GHz, 15 GHz, 17 GHz, 18 GHz, there is a good linear relationship between the carbon content and the phase of S21, and fitting functions at different frequency points are respectively as follows:

$$Pha1=-29.55UCC+6.221;$$

$$Pha2=-31.4UCC+7.848;$$

$$Pha3=-34.14UCC+8.855;$$

$$Pha4=-35.54UCC+9.375.$$

The measured value of the standard fly ash sample in the above figure is taken as a calibration value. At the moment, if the measured phase of the same coal type of the same power plant at the frequency point 13 GHz is Pha, linear interpolation is performed on the data, and the carbon content value is UCC=(Pha-6.221)/-29.55.

Fig. 2 is the result obtained by detecting the carbon content of fly ash in the tail flue of an actual power plant using the present invention in a laboratory environment. It can be seen from the experimental result that there is a relatively stable and obvious distinction between measurement curves of different carbon contents. Every 2% increase in the carbon content corresponds to a 15-20° change in the parameter S21. Linear fitting processing is performed on the measurement result at a single frequency point. From the fitting result, in the set frequency band, measuring points show a good linear relationship. In addition, after repeat experiments, the relative uncertainty of the measurement result is up to 5.5%, and is basically maintained to be about 3%, and therefore the reliability of the measurement result is high.

In the description of the present application, it should be understood that terms "first", "second" and the like are only used for descriptive purposes, and cannot be understood as indicating or implying relative importance or implicitly indicating the number of technical features indicated. In the description of the present invention, "a plurality of" means two or more, unless otherwise specifically defined.

In the present application, unless otherwise expressly stipulated and limited, terms "connected", "connection", "fixed" and other terms should be understood in a broad sense. For example, the "connection" can be fixed connection, detachable connection, or integral connection, can be electrical connection, direct connection or indirect connection through an intermediate medium, and can be communication between two components or an interaction relationship between the two components. Those of ordinary skill in the art can understand the specific meanings of the above terms in the present invention according to specific circumstances.

In the description of the present invention, a lot of specific details are described. However, it can be understood that the embodiments of the present invention can be practiced without these specific details. In some instances, well-known methods, systems and technologies are not shown in detail so as not to obscure the understanding of this description.

## Claims

1. A system for detecting carbon content of fly ash by a hollow metallic waveguide (1) under dynamic conditions, wherein comprising:

   a bypass measurement unit, used for collecting fly ash inside a flue in real time; and
   a measurement device (14), used for emitting microwaves to measure fly ash inside the bypass measurement unit, and for analyzing measured data;
   wherein the bypass measurement unit is configured for being connected to the flue, and the measurement device (14) is connected to the bypass measurement unit through a coaxial cable (3),
   wherein the bypass measurement unit comprises the hollow metallic waveguide (1), cooling devices, coaxial converters, electromagnetic wave isolation devices and a flue gas processing device, wherein the hollow metallic waveguide (1) is used for measuring the carbon content of the fly ash by using transmitted microwave signals, two microwave transmission ports (10) are symmetrically formed in an outer side wall of the hollow metallic waveguide (1), and are both connected to one ends of two sleeves (13), the other ends of the two sleeves (13) are both connected to the two coaxial converters, and cooling devices sleeve the sleeves (13);
   two ends of the hollow metallic waveguide (1) are internally provided with the electromagnetic wave isolation devices for reflecting electromagnetic waves, so as to make the electromagnetic waves be incapable of being reversely transmitted to the two ends of the hollow metallic waveguide (1) connected to the electromagnetic waves for avoiding energy dissipation;
   the hollow metallic waveguide (1) is connected to the flue gas processing device through connecting flanges at the two ends;
   a standard fly ash sample inlet is arranged on one of the connecting flanges and communicates with an inside of the hollow metallic waveguide (1); and
   the measurement device (14) is connected to the two coaxial converters through coaxial cables (3);
   wherein the electromagnetic wave isolation device is a rectangular metal sheet with a thickness of 0.8-1.2 mm; and one end of the electromagnetic wave isolation device is located at an end portion of the hollow metallic waveguide (1), the other end of the electromagnetic wave isolation device is located above the microwave transmission port and does not exceed a circle center position of the microwave transmission port;
   wherein a length of the hollow metallic waveguide (1) is an even multiple of a measured microwave wavelength, and the length of the hollow metallic waveguide (1) is cannot be larger than 300 mm, and a cross section of the hollow metallic waveguide (1) has a circular or rectangular shape,
   wherein, the system further comprises heat-insulation sealing components for preventing heat transfer and achieving a sealing function, and metal coupling pieces for adjusting the frequency of input and output electromagnetic waves; both the heat-insulation sealing components and the metal coupling pieces are arranged between the cooling devices and the microwave transmission ports; and the heat-insulation sealing component is a mica sheet with a thickness of 0.5 mm-1 mm, the metal coupling piece is a rectangular body of which a central position is provided with a rounded rectangular through hole, and there can be one group of or multiple groups of metal coupling pieces.

2. The system according to claim 1, wherein the system further comprises a purge unit for purging the inside of the hollow metallic waveguide (1), wherein the purge unit comprises a purge connection pipe, a forward purge valve and a reverse purge valve; one end of the forward purge valve and one end of the reverse purge valve are respectively connected to the two ends of the hollow metallic waveguide (1) through pipes, and the other end of the forward purge valve and the other end of the reverse purge valve are connected to a purge gas source through the purge connection pipe.

3. The system according to claim 1, wherein the flue gas processing device comprises jet devices, a cyclone separator and an air compressor; wherein the jet devices comprise a first jet device and a second jet device, the first jet device and the second jet device are arranged at the two ends of the hollow metallic waveguide (1) through the flanges, and the cyclone separator is arranged between the first jet device and the flange.

4. A method for measuring the carbon content of fly ash by utilizing the system according to any one of claims 1-3 having a hollow metallic waveguide (1), a measurement device (14), a first jet device, an air compressor, and a cyclone separator, wherein specifically comprising the following steps:

   S1) first, injecting a standard fly ash sample of same coal into the hollow metallic waveguide (1) through a standard fly ash sample inlet, measuring the standard fly ash sample by microwaves in the hollow metallic waveguide (1), analyzing data obtained by the measurement device (14) to obtain data of the amplitude and phase of S21 of the standard fly ash sample, and then fitting the obtained data of the amplitude and phase of S21 to obtain a fitting relational expression of the standard fly ash sample at different frequency points; and

S2) initiating the air compressor to introduce fly ash in a flue into the hollow metallic waveguide (1) through the first jet device and the cyclone separator, measuring the introduced fly ash to be measured through the microwave at any frequency point selected by the measurement device (14) to obtain an amplitude and a phase of a fly ash sample to be measured, substituting the amplitude and the phase into the relational expression obtained in the S1) to calculate the carbon content of the fly ash sample to be measured.

5. The method according to claim 4, wherein the S1) comprises the following specific steps:

S1.1) first, injecting the standard fly ash sample of the same coal into the hollow metallic waveguide (1) through the standard fly ash sample inlet; and

S1.2) initiating the measurement device (14) to measure standard fly ash in the hollow metallic waveguide (1) so as to obtain data of the amplitude and phase of S21 of the standard fly ash, fitting the obtained data of the amplitude and phase of S21 respectively by using linear, quadratic or exponential functions, and then selecting a fitting result with the best fitting degree or a fitting result with the a fitting degree lager than 0.95 as a calibration curve to obtain the fitting relational expression at different frequency points.

6. The method according to claim 4, wherein the S2) comprises the following specific steps:

S2.1) acquiring fly ash, sending the fly ash sample to be measured acquired from a tail flue of the same power plant into the cyclone separator for gas-solid separation, wherein gas is discharged, and fly ash solid particles fall into the hollow metallic waveguide (1) due to self-gravity and the negative pressure formed by the first jet device; and

S2.2) initiating the measurement device (14) to measure the fly ash to be measured in the hollow metallic waveguide (1) so as to obtain data of the amplitude and phase of S21 of the fly ash to be measured, substituting the measured data of the amplitude and phase of S21 into the fitting relational expression of the calibration curve obtained in the S1.2) to obtain a determined value of the carbon content of the fly ash to be measured.

**Patentansprüche**

1. Ein System zum Detektieren eines Kohlenstoffgehalts von Flugasche mittels eines hohlen metallischen Wellenleiters (1) unter dynamischen Bedingungen, umfassend:

eine Bypass-Messeinheit, die zum Sammeln von Flugasche innerhalb eines Schornsteins in Echtzeit verwendet wird; und

ein Messgerät (14), das verwendet wird zum Aussenden von Mikrowellen, um Flugasche innerhalb der Bypass-Messeinheit zu messen, und zum Analysieren der gemessenen Daten; wobei die Bypass-Messeinheit dazu eingerichtet ist, mit dem Schornstein verbunden zu werden, und das Messgerät (14) mit der Bypass-Messeinheit über ein Koaxialkabel (3) verbunden ist,

wobei die Bypass-Messeinheit den hohlen metallischen Wellenleiter (1), Kühlvorrichtungen, Koaxialwandler, elektromagnetische Wellenisolationsvorrichtungen und eine Rauchgasverarbeitungsvorrichtung umfasst, wobei der hohle metallische Wellenleiter (1) zur Messung des Kohlenstoffgehalts der Flugasche unter Verwendung von übertragenen Mikrowellensignalen verwendet wird, zwei Mikrowellenübertragungsöffnungen (10) symmetrisch in einer äußeren Seitenwand des hohlen metallischen Wellenleiters (1) gebildet sind und beide mit einem Enden von zwei Hülsen (13) verbunden sind, die anderen Enden der zwei Hülsen (13) beide mit den zwei Koaxialwandlern verbunden sind und Kühlvorrichtungen die Hülsen (13) umhüllen;

zwei Enden des hohlen metallischen Wellenleiters (1) sind innen mit den elektromagnetischen Wellenisolationsvorrichtungen versehen, um elektromagnetische Wellen zu reflektieren, so dass die elektromagnetischen Wellen nicht in umgekehrter Richtung zu den beiden Enden des hohlen metallischen Wellenleiters (1), die mit den elektromagnetischen Wellen verbunden sind, übertragen werden können, um Energiedissipation zu vermeiden;

der hohle metallische Wellenleiter (1) ist mit der Rauchgasverarbeitungsvorrichtung durch Verbindungsflansche an den beiden Enden verbunden;

ein Standard-Flugasche-Probeneinlass ist an einem der Verbindungsflansche angeordnet und steht mit einer Innenseite des hohlen metallischen Wellenleiters (1) in Verbindung; und das Messgerät (14) ist mit den beiden Koaxialwandlern über Koaxialkabel (3) verbunden; wobei die elektromagnetische Wellenisolationsvorrichtung ein rechteckiges Metallblech mit einer Dicke von 0,8-1,2 mm ist; und ein Ende der elektromagnetischen Wellenisolationsvorrichtung an einem Endabschnitt des hohlen metallischen Wellenleiters (1) angeordnet ist, das andere Ende der elektromagnetischen Wellenisolationsvorrichtung oberhalb der Mikrowellenübertragungsöffnung angeordnet ist und eine Kreismittelposition der Mikrowellenübertragungsöffnung nicht überschreitet; wobei eine Länge des hohlen metallischen Wellenleiters (1) ein gerades Vielfaches einer gemessenen Mikrowellenwellenlänge ist und die Länge des hohlen metallischen Wellenleiters (1) nicht größer als 300 mm sein kann und ein Querschnitt des hohlen metallischen Wellenleiters (1) eine kreisförmige oder rechteckige Form hat, wobei das System ferner wärmeisolierende Dichtungskomponenten zum Verhindern von Wärmeübertragung und zum Erreichen einer Dichtungsfunktion und Metallkopplungsstücke zum Einstellen der Frequenz von elektromagnetischen Eingangs- und Ausgangswellen umfasst; wobei sowohl die wärmeisolierenden Dichtungskomponenten als auch die Metallkopplungsstücke zwischen den Kühlvorrichtungen und den Mikrowellenübertragungsöffnungen angeordnet sind; und wobei die wärmeisolierende Dichtungskomponente eine Glimmerplatte mit einer Dicke von 0,5 mm bis 1 mm ist, wobei das Metallkopplungsstück ein rechteckiger Körper ist, von dem eine zentrale Position mit einem abgerundeten rechteckigen Durchgangsloch versehen ist, und wobei es eine Gruppe oder mehrere Gruppen von Metallkopplungsstücken geben kann.

2. Das System gemäß Anspruch 1, wobei das System ferner eine Spüleinheit zum Spülen des Inneren des hohlen metallischen Wellenleiters (1) umfasst, wobei die Spüleinheit ein Spülverbindungsrohr, ein Vorwärtsspülventil und ein Rückwärtsspülventil umfasst; wobei ein Ende des Vorwärtsspülventils und ein Ende des Rückwärtsspülventils jeweils über Rohre mit den beiden Enden des hohlen metallischen Wellenleiters (1) verbunden sind und das andere Ende des Vorwärtsspülventils und das andere Ende des Rückwärtsspülventils über das Spülverbindungsrohr mit einer Spülgasquelle verbunden sind.

3. Das System gemäß Anspruch 1, wobei die Rauchgasverarbeitungsvorrichtung Strahlvorrichtungen, einen Zyklonabscheider und einen Luftverdichter umfasst; wobei die Strahlvorrichtungen eine erste Strahlvorrichtung und eine zweite Strahlvorrichtung umfassen, die erste Strahlvorrichtung und die zweite Strahlvorrichtung an den beiden Enden des hohlen metallischen Wellenleiters (1) durch die Flansche hindurch angeordnet sind, und der Zyklonabscheider zwischen der ersten Strahlvorrichtung und dem Flansch angeordnet ist.

4. Ein Verfahren zur Messung des Kohlenstoffgehalts von Flugasche unter Verwendung des Systems gemäß einem der Ansprüche 1 bis 3 mit einem hohlen metallischen Wellenleiter (1), einer Messvorrichtung (14), einer ersten Strahlvorrichtung, einem Luftverdichter und einem Zyklonabscheider, das konkret die folgenden Schritte umfasst:

S1) zuerst Einführen einer Standard-Flugasche-Probe derselben Kohle in den hohlen metallischen Wellenleiter (1) durch einen Standard-Flugasche-Probeneinlass, Messen der Standard-Flugasche-Probe durch Mikrowellen in dem hohlen metallischen Wellenleiter (1), Analysieren durch die Messvorrichtung (14) erhaltener Daten, um Daten der Amplitude und Phase von S21 der Standard-Flugasche-Probe zu erhalten, und dann Anpassen der erhaltenen Daten der Amplitude und Phase von S21, um einen Anpassungsrelationsausdruck der Standard-Flugasche-Probe an verschiedenen Frequenzpunkten zu erhalten; und
S2) Einschalten des Verdichters, um Flugasche in einem Abzug durch die erste Strahlvorrichtung in den hohlen metallischen Wellenleiter (1) und den Zyklonabscheider einzuführen, Messen der eingeführten Flugasche, die durch die Mikrowelle an einem beliebigen Frequenzpunkt zu messen ist, der von der Messvorrichtung (14) ausgewählt wird, um eine Amplitude und eine Phase einer zu messenden Flugascheprobe zu erhalten, Einsetzen der Amplitude und der Phase in den in S1) erhaltenen relationalen Ausdruck, um den Kohlenstoffgehalt der zu messenden Flugascheprobe zu berechnen.

5. Das Verfahren gemäß Anspruch 4, wobei der S1) die folgenden spezifischen Schritte umfasst:

S1.1) zunächst Injizieren der Standard-Flugascheprobe derselben Kohle in den hohlen metallischen Wellenleiter (1) durch den Standard-Flugascheprobeneinlass; und
S1.2) Einschalten der Messvorrichtung (14) zum Messen von Standard-Flugasche in dem hohlen metallischen Wellenleiter (1), um Daten der Amplitude und der Phase von S21 der Standard-Flugasche zu erhalten, Anpassen der erhaltenen Daten der Amplitude bzw. der Phase von S21 unter Verwendung linearer, quadratischer oder exponentieller Funktionen und anschließendes Auswählen eines Anpassungsergebnisses mit dem besten Anpassungsgrad oder eines Anpassungsergebnisses mit einem Anpassungsgrad größer als 0,95 als eine Kalibrierungskurve, um den Anpassungsrelationsausdruck an verschiedenen Frequenzpunkten zu erhalten.

6. Das Verfahren gemäß Anspruch 4, wobei der S2) die folgenden spezifischen Schritte umfasst:

S2.1) Erhalten von Flugasche, Senden der zu messenden Flugascheprobe, die aus einem Abgasabzug desselben Kraftwerks erhalten wurde, in den Zyklonabscheider zur Gas-Feststoff-Trennung, wobei Gas abgeleitet wird und Flugasche-Feststoffpartikel aufgrund der Eigengravitation und des durch die erste Strahlvorrichtung gebildeten Unterdrucks in den hohlen metallischen Wellenleiter (1) fallen; und

S2.2) Initiieren der Messvorrichtung (14) zum Messen der zu messenden Flugasche in dem hohlen metallischen Wellenleiter (1), um Daten der Amplitude und Phase von S21 der zu messenden Flugasche zu erhalten, Einsetzen der gemessenen Daten der Amplitude und Phase von S21 in den Anpassungsrelationsausdruck der in S1.2) erhaltenen Kalibrierkurve, um einen bestimmten Wert des Kohlenstoffgehalts der zu messenden Flugasche zu erhalten.

**Revendications**

1. Système pour détecter de la teneur en carbone de la cendre volante par un guide d'ondes métallique creux (1) dans des conditions dynamiques, comprenant :

une unité de mesure de dérivation, utilisée pour collecter de la cendre volante à l'intérieur d'un conduit de fumée en temps réel ; et

un dispositif de mesure (14), utilisé pour émettre des micro-ondes afin de mesurer de la cendre volante à l'intérieur de l'unité de mesure de dérivation, et pour analyser des données mesurées ;

dans lequel l'unité de mesure de dérivation est configurée pour être connectée au conduit de fumée, et le dispositif de mesure (14) est connecté à l'unité de mesure de dérivation à travers d'un câble coaxial (3),

dans lequel l'unité de mesure de dérivation comprend le guide d'ondes métallique creux (1), des dispositifs de refroidissement, des convertisseurs coaxiaux, des dispositifs d'isolation d'ondes électromagnétiques et un dispositif de traitement de gaz de fumée, dans lequel le guide d'ondes métallique creux (1) est utilisé pour mesurer la teneur en carbone de la cendre volante en utilisant des signaux micro-ondes transmis, deux ports de transmission de micro-ondes (10) sont symétriquement formés dans une paroi latérale extérieure du guide d'ondes métallique creux (1), et sont tous deux connectés à l'une des extrémités de deux manchons (13), les autres extrémités des deux manchons (13) sont toutes deux connectées aux deux convertisseurs coaxiaux, et des dispositifs de refroidissement manchonnent les manchons (13) ;

deux extrémités du guide d'ondes métallique creux (1) sont fournies intérieurement avec les dispositifs d'isolation d'ondes électromagnétiques pour réfléchir des ondes électromagnétiques, de manière à empêcher la transmission inverse des ondes électromagnétiques aux deux extrémités du guide d'ondes métallique creux (1) connectées aux ondes électromagnétiques pour éviter la dissipation d'énergie ;

le guide d'ondes métallique creux (1) est relié au dispositif de traitement de gaz de fumée à travers des brides de connexion aux deux extrémités ;

une entrée d'échantillon de cendre volante standard est disposée sur l'une des brides de connexion et communique avec un intérieur du guide d'ondes métallique creux (1) ; et

le dispositif de mesure (14) est relié aux deux convertisseurs coaxiaux à travers des câbles coaxiaux (3) ;

dans lequel le dispositif d'isolation d'ondes électromagnétiques est une feuille de métal rectangulaire d'une épaisseur de 0,8 à 1,2 mm ; et une extrémité du dispositif d'isolation d'ondes électromagnétiques est située à une partie terminale du guide d'ondes métallique creux (1), l'autre extrémité du dispositif d'isolation d'ondes électromagnétiques est située au-dessus du port de transmission de micro-ondes et ne dépasse pas une position centrale de cercle du port de transmission de micro-ondes ;

dans lequel une longueur du guide d'ondes métallique creux (1) est un multiple pair d'une longueur d'onde micro-ondes mesurée, et la longueur du guide d'ondes métallique creux (1) ne peut pas être supérieure à 300 mm, et une section transversale du guide d'ondes métallique creux (1) a une forme circulaire ou rectangulaire, dans lequel le système comprend en outre des composants d'isolation thermique pour empêcher le transfert de chaleur et assurer une fonction d'étanchéité, et des pièces de couplage métallique pour ajuster la fréquence des ondes électromagnétiques d'entrée et de sortie ; tous deux les composants d'isolation thermique et les pièces de couplage métallique sont disposés entre les dispositifs de refroidissement et les ports de transmission de micro-ondes ; et le composant d'isolation thermique est une feuille de mica d'une épaisseur de 0,5 mm-1 mm, la pièce de couplage métallique est un corps rectangulaire dont une position centrale est fournie d'un trou traversant rectangulaire arrondi, et il peut y avoir un groupe de ou plusieurs groupes de pièces de couplage métallique.

2. Le système selon la revendication 1, dans lequel le système comprend en outre une unité de purge pour purger l'intérieur du guide d'ondes métallique creux (1), dans lequel l'unité de purge comprend un tuyau de connexion de purge, une soupape de purge avant et une soupape de purge inverse ; une extrémité de la soupape de purge avant et une extrémité de la soupape de purge inverse sont respectivement reliées aux deux extrémités du guide d'ondes métallique creux (1) à travers des tuyaux, et l'autre extrémité de la soupape de purge avant et l'autre extrémité de la soupape de purge inverse sont reliées à une source de gaz de purge à travers du tuyau de connexion de purge.

3. Système selon la revendication 1, dans lequel le dispositif de traitement de gaz de fumée comprend des dispositifs de jet, un séparateur cyclonique et un compresseur d'air ; dans lequel
les dispositifs de jet comprennent un premier dispositif de jet et un second dispositif de jet, le premier dispositif de jet et le second dispositif de jet sont disposés aux deux extrémités du guide d'ondes métallique creux (1) à travers les brides, et le séparateur cyclonique est disposé entre le premier dispositif de jet et la bride.

4. Méthode pour mesurer la teneur en carbone de la cendre volante en utilisant le système selon l'une quelconque des revendications 1 à 3, comportant un guide d'ondes métallique creux (1), un dispositif de mesure (14), un premier dispositif de jet, un compresseur d'air et un séparateur cyclonique, dans laquelle comprenant les étapes spécifiques suivantes :

S1) premièrement, injecter un échantillon de cendre volante standard du même charbon dans le guide d'ondes métallique creux (1) à travers une entrée d'échantillon de cendre volante standard, mesurer l'échantillon de cendre volante standard par micro-ondes dans le guide d'ondes métallique creux (1), analyser des données obtenues par le dispositif de mesure (14) pour obtenir des données de l'amplitude et de la phase de S21 de l'échantillon de cendre volante standard, et ensuite ajuster les données obtenues de l'amplitude et de la phase de S21 pour obtenir une expression relationnelle d'ajustement de l'échantillon de cendre volante standard à différents points de fréquence ; et
S2) initier le compresseur d'air pour introduire de la cendre volante dans un conduit de fumée dans le guide d'ondes métallique creux (1) à travers le premier dispositif de jet et le séparateur cyclonique, mesurer la cendre volante à mesurer introduite à travers les micro-ondes à n'importe quel point de fréquence sélectionné par le dispositif de mesure (14) pour obtenir une amplitude et une phase d'un échantillon de cendre volante à mesurer, substituer l'amplitude et la phase dans l'expression relationnelle obtenue en la S1) pour calculer la teneur en carbone de l'échantillon de cendre volante à mesurer.

5. Méthode selon la revendication 4, dans laquelle la S1) comprend les étapes spécifiques suivantes :

S1.1) premièrement, injecter l'échantillon de cendre volante standard du même charbon dans le guide d'ondes métallique creux (1) à travers l'entrée d'échantillon de cendre volante standard ; et
S1.2) initier le dispositif de mesure (14) pour mesurer de la cendre volante standard dans le guide d'ondes métallique creux (1) de manière à obtenir des données de l'amplitude et de la phase de S21 de la cendre volante standard, ajuster les données obtenues de l'amplitude et de la phase de S21 respectivement en utilisant des fonctions linéaires, quadratiques ou exponentielles, et puis sélectionner un résultat d'ajustement avec le meilleur degré d'ajustement ou un résultat d'ajustement avec un degré d'ajustement supérieur à 0,95 comme courbe d'étalonnage pour obtenir l'expression relationnelle d'ajustement à différents points de fréquence.

6. Méthode selon la revendication 4, dans laquelle la S2) comprend les étapes spécifiques suivantes :

S2.1) acquérir de la cendre volante, envoyer l'échantillon de cendre volante à mesurer acquis d'un conduit de fumée de queue de la même centrale électrique dans le séparateur cyclonique pour la séparation gaz-solide, dans lequel du gaz est évacué et des particules solides de cendre volante tombent dans le guide d'ondes métallique creux (1) en raison de l'autogravité et de la pression négative formée par le premier dispositif de jet ; et
S2.2) initier le dispositif de mesure (14) pour mesurer la cendre volante à mesurer dans le guide d'ondes métallique creux (1) de manière à obtenir des données de l'amplitude et de la phase de S21 de la cendre volante à mesurer, substituer les données mesurées de l'amplitude et de la phase de S21 dans l'expression relationnelle d'ajustement de la courbe d'étalonnage obtenue en la S1.2) pour obtenir une valeur déterminée de la teneur en carbone de la cendre volante à mesurer.

Fig. 1

Fig. 2

Fig. 3

**EP 3 875 947 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5177444 A

- CN 107356612 A